# EUROPEAN PATENT SPECIFICATION

(11) **EP 2 373 190 B1**
(45) Date of publication and mention of the grant of the patent: **30.05.2012**
(21) Application number: 09807552.6
(22) Date of filing: 04.12.2009
(51) Int. Cl.: A41D 13/018, B60R 21/2338

(54) **PROTECTION DEVICE INCLUDING AN INFLATABLE MEMBER**
SCHUTZVORRICHTUNG MIT EINEM AUFBLASBAREN ELEMENT
DISPOSITIF DE PROTECTION COMPRENANT UN ÉLÉMENT GONFLABLE

(30) Priority: 09.12.2008 IT RM20080656; 29.05.2009 IT VR20090078
(43) Date of publication of application: 12.10.2011
(73) Proprietor: Dainese S.p.A., 36060 Molvena VI (IT)
(72) Inventor: DAINESE, Lino, I-36060 Molvena VI (IT); RONCO, Luigi, I-36060 Molvena VI (IT); AZZOLIN, Andrea, I-36060 Molvena VI (IT)
(74) Representative: Manfrin, Marta
(86) International application number: PCT/IT2009/000547
(87) International publication number: WO 2010/067393

(56) References cited:
- EP-A1- 0 943 499
- DE-A1- 10 141 437
- GB-A- 2 302 642
- US-A- 4 089 065
- US-A- 5 500 952
- US-A1- 2006 248 632

## Description

The present disclosure relates to a protection device suitable for use on a user and/or with a vehicle so as to protect the user or a passenger of the vehicle from impacts against a solid body and/or against the vehicle or portions of the vehicle, for example in the event of an accident.

In recent years, following constant research into safety when driving vehicles, a plurality of protection devices for a user travelling in or on the vehicle have been devised. One solution consists, for example, in a protection device including an inflatable member or inflatable bag which, in the rest condition, is arranged deflated and folded inside a housing within the user's garment and/or in a housing situated within the vehicle opposite parts of the user's body and/or in parts of the vehicle which may be potentially affected by impacts, i.e. against which the user may come into contact in the event in an accident, see for example US 4,089,065. The inflatable bag is moreover placed in fluid communication, during an impact, sliding or an accident in general, with a compressed-gas source, such as a canister. Generally, the gas source is able to introduce into the inflatable bag a predefined quantity of compressed gas such as to inflate, and therefore tension, the inflatable member so as to form an inflated, round-shaped, balloon-like casing. Therefore, the quantity of gas introduced is strictly related to the volume of the inflatable bag so as to ensure satisfactory inflation and effective protection.

Basically, these bags, in the inflated condition, form a kind of balloon which is somewhat voluminous and has a large cross-section, said balloon being arranged in the inflated condition between the user and the portion of the vehicle or solid object in general.

One drawback of the known inflatable bags consist in the fact that there is a limited possibility of adapting the shape of the inflatable bag to the anatomy of a user's body or to the configuration of a zone in the vehicle with which the inflatable bag is associated.

In other words, a drawback of the known inflatable bag is that it cannot be very easily adapted to the zone of the vehicle in which it is arranged or to the part of a user's body on which it is used.

Consequently, in order to ensure maximum protection, this kind of inflated balloon is conveniently arranged in each zone of the user's body and of the vehicle in question. This requirement, however, involves the need for a large number of inflatable bags and a large number of compressed-gas or, more generally, pressurised-fluid sources.

A technical problem forming the basis of the present disclosure consists in providing a protection device which is able to overcome said drawback and/or which is able to achieve further advantages.

This problem is solved by a protection device as defined in the independent Claim 1.

Secondary characteristic features of the subject of the present disclosure are defined in the corresponding dependent claims.

The term "mesh" is understood in the context of the present disclosure as meaning a porous patch or piece of cloth which has a mesh-like appearance.

The term "wall" or "sheet" is understood in the context of the present disclosure as meaning a covering member for a respective mesh, where the first and second walls are associated with each other so as to define an internal chamber inside which the first and second meshes and the tie members connecting together the first and second meshes are arranged.

The term "tie member" is understood as meaning a part or object which has the function of keeping joined together or fastened or immobile, while being subject to a tensile stress, two or more facing parts of the inflatable member, and in particular the meshes, when the inflatable member is in the inflated condition.

The subject of the present disclosure provides a number of significant advantages.

A first advantage consists in the fact that the inflatable member may be folded to form an angle in the region of at least one seam and may keep the fold also in the inflated condition. Basically, the seam limits locally expansion of the inflatable member and allows folding of the inflatable member in the zone where expansion is limited.

Moreover, since the seam joins together the two opposite meshes, without however stitching together the respective walls or sheets, there is no risk of the inflating fluid passing through the walls and affecting the possibility of keeping the inflatable member inflated. Preferably the seam includes 2 to 3 stitches per centimetre (namely it has a stitching interval of between about 3 and 5 mm).

Another advantage consists in the use of tie members which connect together the two meshes. In particular, the advantage consists in the fact that the inflatable member may be made in any form and size, it being sufficient to arrange the structure including the two meshes inside the internal chamber, adjusting beforehand the length of the tie members between the two meshes so that the tie members are in the fully tensioned and/or fully extended condition when the inflatable member is inflated. Basically, the shape and size of the inflatable member may be controlled and determined beforehand since the maximum expansion of the inflatable member and its local thickness can be controlled by means of a suitable choice of the length and maximum extension of the tie members.

Therefore, by suitably shaping the structure or body including the two meshes with the tie members, forming one or more seams in the region of the folding zones and, where necessary, providing different lengths for the tie members depending on their location inside the internal chamber, it is possible to determine beforehand the shape assumed by the inflatable member in the inflated condition (both in terms of the distance between the two meshes and in terms of the perimetral form of the two meshes) and also as regards folding of the inflatable member.

Consequently, owing to the fact that is possible to fold the inflatable member and at the same time provide an inflatable member of any form, profile and shape, preferably with a flat form, the inflatable member may be designed so as to surround, with suitable folds, at least partly the user and/or be arranged around the user in an inflated condition.

This possibility is particularly useful for being able to arrange the inflatable member on a part of the user's body, adapting the inflatable member to an anatomical form of the body part, or inside a motor vehicle, adapting the inflatable member to the zone of the vehicle where the inflatable member is arranged. The protection device in question is therefore essentially a protection device which can be worn.

For example, the protection device may be folded in the region of an elbow or shoulder of the user.

Alternatively, inside a motor vehicle, the inflatable member may be arranged folded to form an angle between a side wall and the roof of the passenger compartment or inserted along the sides of a head-rest so as to protect the user's head laterally or inserted along the sides of a seat or underneath the dashboard or the steering wheel so as to protect the trunk, legs and knees of the user.

According to a further alternative, on a motorcycle, the inflatable member may be arranged on the handlebars of the motorcycle so that, when inflated, it remains folded around the motorcycle handlebars, adapting substantially to the form of the latter.

Essentially, the inflatable member according to the present disclosure, since it may be provided with a folded form even in the inflated condition, can be easily arranged also in areas where airbags according to the prior art cannot be positioned or where they do not function effectively.

Another advantage consists in the fact that at least one seam may be provided in a zone where there is a high through-flow of inflating fluid. In this connection the seam occupies a restricted zone of the meshes so as to leave the adjacent zones free for the fluid to pass through.

Furthermore, another advantage according to the present invention is that the inflatable member may be folded several times onto itself (for example including a series of successive folds) so as to form a layered structure.

In this way, it is possible to design the inflatable member beforehand so that it has a three-dimensional form in the inflated condition; for example it is possible to provide a cube-shaped form or similar three-dimensional body.

Preferably, each mesh is glued with a layer of adhesive to the respective wall so that this layer of glue also covers the seam.

In one embodiment, the seam forms a closed line, i.e. it preferably forms a closed loop, for example in the form of a rectangle.

By means of said closed-line form it is possible to flatten fully a zone or region of the inflatable member, thereby reducing to a minimum the thickness of the inflatable member in the region of a fold.

As a result of said closed-loop form it is possible to achieve an adequate resistance to the force of the pressurised fluid during inflation. In fact, the fluid which reaches the seam is deviated laterally to the right and left of the closed loop and a lateral distribution of the fluid's power is thus achieved; in this way there is less risk of the seam coming loose or less risk of tearing and ripping of the meshes in the region of the seam.

In one embodiment, the closed-loop seam has terminal portions which intersect each other. Basically, the terminal portions of the closed loop intersect and are superimposed only at the intersection.

As a result of the intersection the seam will have a greater thickness only at the intersection, while the rest of the seam has only a limited thickness. In one embodiment, the terminal portions of the seam intersect towards the inside and therefore have free ends arranged inside the closed loop. The free ends are essentially protected inside the closed loop. With this embodiment it is possible to reduce further the risk of the seam being loosened by the flow of the pressurised fluid, as well as the risk of tears.

In one embodiment, the device also comprises a reinforcing element associated with a respective surface portion of the meshes and superimposed on said at least one seam. Basically, the reinforcing element is arranged between a mesh and the respective wall.

This reinforcing element is able to encapsulate and isolate the seam from the corresponding wall so as to ensure that the inflating fluid passes between a mesh and the respective wall, causing the undesirable formation of bubbles on the outer surface of the inflatable member.

Furthermore, this reinforcing element allows the seam to be protected from the stresses produced by the pressure of the fluid. In fact, when the inflatable member is inflated, the reinforcing element is tensioned by the inflatable member itself and therefore has a more rigid behaviour than in the deflated condition, thereby making the seam stronger.

Moreover, the presence of the reinforcing element is advantageous since it allows an increase in the resistance to penetration: a concentrated force (for example due to an impact against a sharp object) in the region of the seam is redistributed by the reinforcing element over a broader area of the inflatable member.

In other words, the local deformation of the inflatable member due to the force of the fluid or to a concentrated force of a sharp object is reduced, and therefore the protective capacity is increased, since there is less likelihood of the fluid and/or said sharp object being able to deform the seam at this point to the point of breakage.

In one embodiment, the device comprises a pair of reinforcing elements, each one on a respective mesh, so as to protect the seam on both sides.

In one embodiment, the reinforcing element is a sheet-like part made of impermeable material and arranged in the manner of a patch over the seam; for example the reinforcing element is a polyurethane sheet which is also flexible and therefore does not constitute an obstacle for handling of the protection device.

In one embodiment the protection device comprises at least two seams arranged alongside each other, a fold being provided along each seam. The use of two seams is advantageous for forming substantially parallel consecutive folds which allow relative displacement of two adjacent portions of an inflatable member at an angle greater than 90° relative to a coplanar condition. In this case, in fact, owing to these folds there would otherwise be the risk of the adjacent portions of the inflatable member in the inflated condition interfering with each other and preventing folding.

Preferably, in order to reduce as far as possible the interference between the adjacent portions of the inflatable member, the distance between said two seams arranged alongside each other is at least equal to the length of the tie members which connect the meshes.

Further advantages, characteristic features and the modes of use of the subject of the present disclosure will become clear from the following detailed description of a number of preferred embodiments thereof, provided solely by way of a non-limiting example. It is clear, however, that each embodiment may have one or more of the advantages listed above; in any case it is not required that each embodiment should have simultaneously all the advantages listed.

Reference shall be made to the figures in the accompanying drawings in which:
- Fig. 1 shows a transversely sectioned side view of a protection device according to the present disclosure, in a folded condition;
- Fig. 2 shows a perspective view of a portion of a protection device according to the present disclosure; during a first processing step;
- Fig. 3 shows a perspective view of a portion of a protection device according to the present disclosure, during a second processing step;
- Fig. 4 shows a perspective view of a portion of a protection device according to the present disclosure, during a third processing step;
- Fig. 5 shows a side view of a portion of a protection device according to the present disclosure, during a fourth processing step;
- Fig. 6 shows a cross-sectional view of a detail VI of Figure 4;
- Fig. 7 shows a view of a detail VII of Figure 4;
- Fig. 8 shows a view of a detail VIII of Figure 1;
- Fig. 9 shows a view of a detail IX of Figure 1;
- Fig. 10 shows a perspective, on a larger scale, of a portion of a protection device according to the present disclosure, during a processing step;
- Fig. 10A shows a transversely sectioned side view of a protection device according to the present disclosure, in a folded condition;
- Fig. 11 shows a view from above of a protection device according to the present disclosure, in a deflated condition, and partly cross-sectioned;
- Fig. 12 shows a view of a detail XII of Figure 11, on a larger scale;
- Fig. 13 shows a view of a detail XIII of Figure 11, on a larger scale;
- Fig. 14 shows a view of a detail XIV of Figure 11, on a larger scale;
- Fig. 15 shows a perspective and partly sectioned view of a device according to the present disclosure;
- Fig. 16 shows a view of a detail XVI according to Figure 15 during a processing step;
- Fig. 17 shows a view of a detail XVII according to Figure 15;
- Fig. 18 shows a view of a detail XVIII according to Figure 15;
- Fig. 19 shows another embodiment of a protection device according to the present disclosure in an inflated condition;
- Fig. 20 shows a sectional view along the line XX-XX of Figure 19;
- Figure 21 shows a front view of a vehicle including a protection device contained inside a respective housing and in a deflated condition;
- Figure 22 shows a front view of the vehicle according to Figure 21, in which the protection device is in an inflated condition.

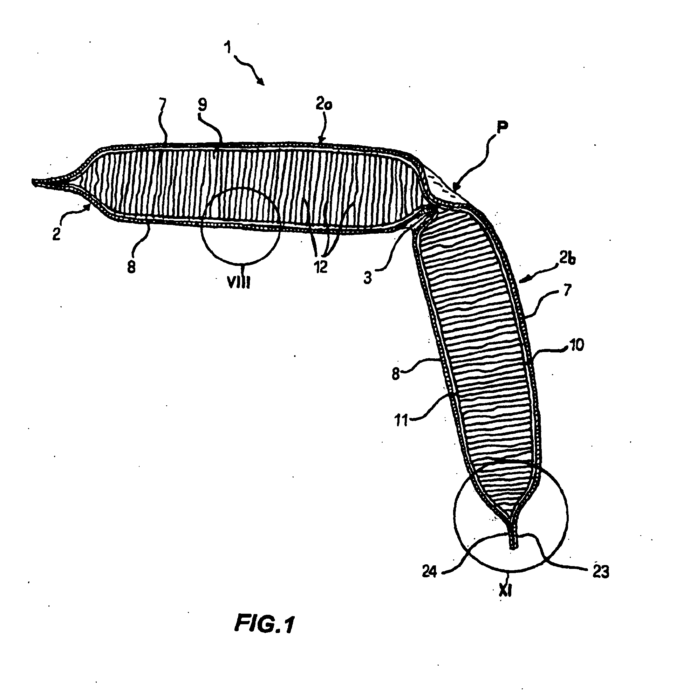

With reference to the accompanying Figures 1 to 9, the reference number 1 denotes a first embodiment of a protection device according to the present disclosure.

The protection device 1 comprises an inflatable member 2 which can be inflated by means of a fluid, for example a pressurised cold gas such as helium.

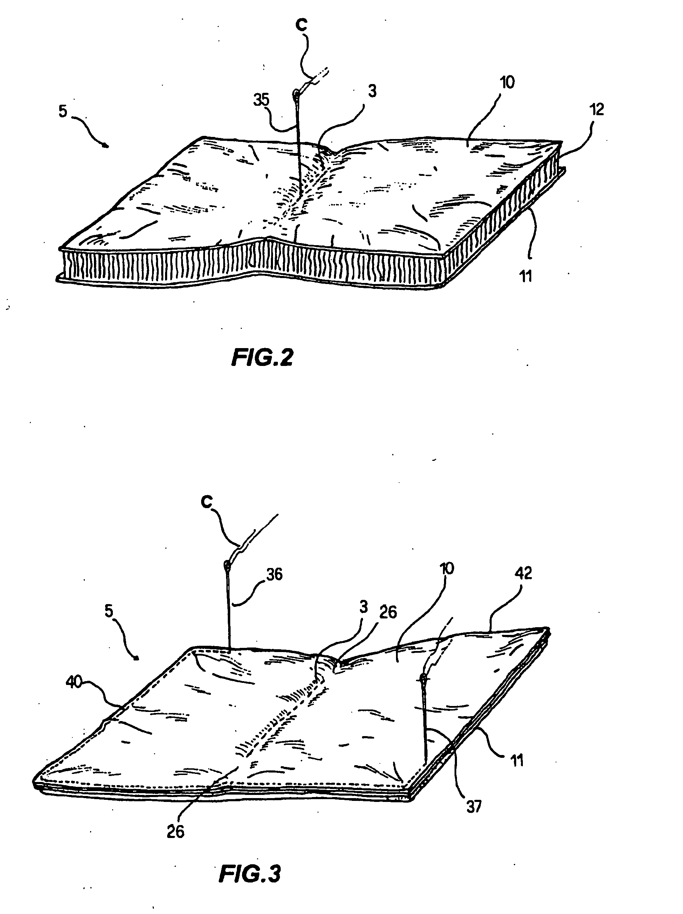

The inflatable member 2 is of the multilayer type and includes two oppositely arranged walls 7, 8 which in the example are made of material which is impermeable to said gas and are joined together, in the example fixed in a gas-type manner, so as to form an internal chamber 9 enclosed between the said walls 7, 8. The inflatable member 2 also includes a so-called double-layer structure - denoted by the reference number 5 in Figures 2, 3 and 4 - which is housed inside the chamber 9.

The structure 5 includes two meshes 10, 11 basically forming two layers arranged opposite each other and connected together by means of a plurality of tie members 12 which in the example are flexible tie members with a thread-like form. Basically, the two walls 7, 8 form a casing housing internally the structure 5 which includes the two meshes 10, 11 and the tie members 12. In particular, each mesh 10, 11 is joined so as to adhere to the respective wall 7, 8, on the internal chamber 9 side, using a glue or similar fixing system.

Even more particularly, the protection device 1 includes at least one first seam 3 which connects and joins together in direct contact the two meshes 10, 11 of the inflatable member 2, defining a reduced thickness of the inflatable member 2 in this zone, when inflated. This seam 3 is associated with a folding zone P of the inflatable member 2, as can be seen in Figure 1, i.e. is formed in a folding zone P. In order to achieve this fold P, the stitching thread C passes through the opposite surface portions of the meshes 10, 11; in particular, the stitching thread C (made of polyamide) passes consecutively above and below the opposite surface portions, respectively, of the meshes 10, 11. The seam in the example in question consists of a linear seam with 2 to 3 stitches per centimetre.

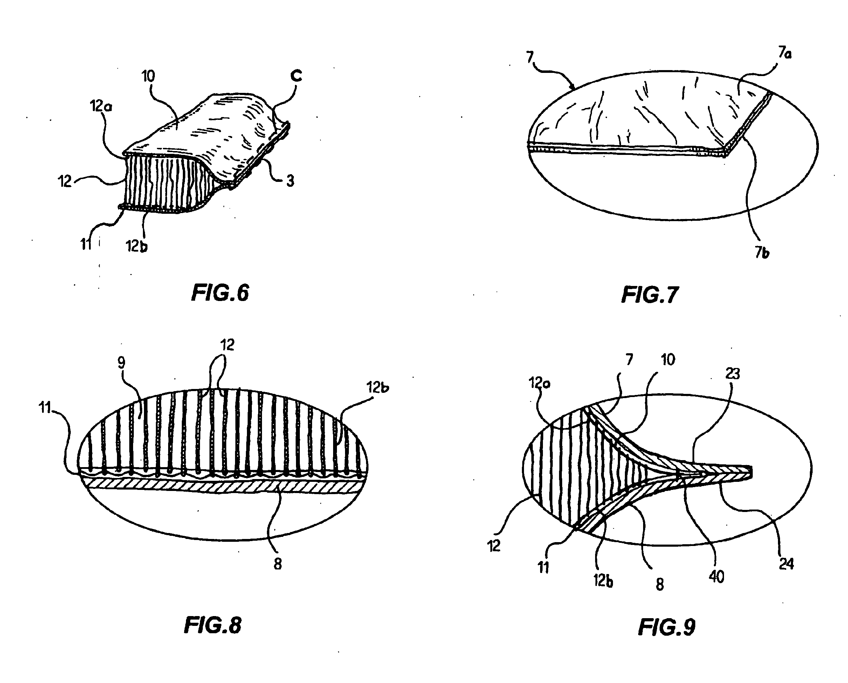

More particularly, the seam 3 is intended to stitch together and connect transversely only the two meshes 10, 11, producing a localised compression of the tie members 12 (Figure 6), without however affecting the walls 7, 8 to which the meshes 10, 11 are glued in an adhering manner. Therefore, in the folding zone P, the inflatable member 2 does not inflate, or in any case inflates only to a limited degree, and folding at an angle is made possible and facilitated owing to the limited thickness. At the same time, diffusion or flowing of the gas inside the inflatable member 2 is permitted. In this connection, it should be pointed out that the seam 3 occupies preferably a confined zone of the structure 5, so as to leave side zones 26 free for passage of the inflating fluid, alongside the seam 3.

In other words, the first seams 3 allow an inflatable member 2 to be folded along the folding zone P, i.e. allow the parts 2a, 2b of the inflatable member 2 to rotate relative to each other about an axis of rotation, even when the inflatable member 2 is an inflated condition and without hindering the passage of the inflating fluid.

The stability of the fold P in the inflated condition is also ensured by the presence of the tie members 12 which impart a certain robustness to the whole of the inflatable member 2.

In the example, the tie members 12 have a thread-like form and consist of flexible and inextensible members. Therefore, they are suitably designed with dimensions such that, when the inflatable member 2 is in the rest condition, they are preferably untensioned and collapsed inside the internal chamber 9, whereas, when the inflatable member 2 is in the inflated condition, they are under tension, except for example for the zones where the seam 3 is situated.

In particular, the tie members 12 are distributed densely within the inflatable member 2, for example with a density of at least one tie member 12 per cm² of surface area of the inflatable member 2, even more preferably, still by way of example, with a density of between 1 and 15 threads per cm² of surface area of the inflatable member 2, and preferably between 4 and 6 threads per cm².

It can be seen that the tie members 12 are distributed in a substantially homogeneous manner inside the internal chamber 9, i.e. their superficial density is substantially the same throughout the inflatable member 2.

As mentioned above, in the example, the tie members 12 are for example polyester or polyamide threads with a thickness of between about 500 and about 1000 decitex (unit of length of a continuous thread or yam) and have ends 12a, 12b which are fixed to the respective portions of the meshes 10, 11 which they connect together. Even more particularly, each thread 12 includes a bundle of untwisted continuous fibres which protrude from a single point on the respective mesh 10, 11.

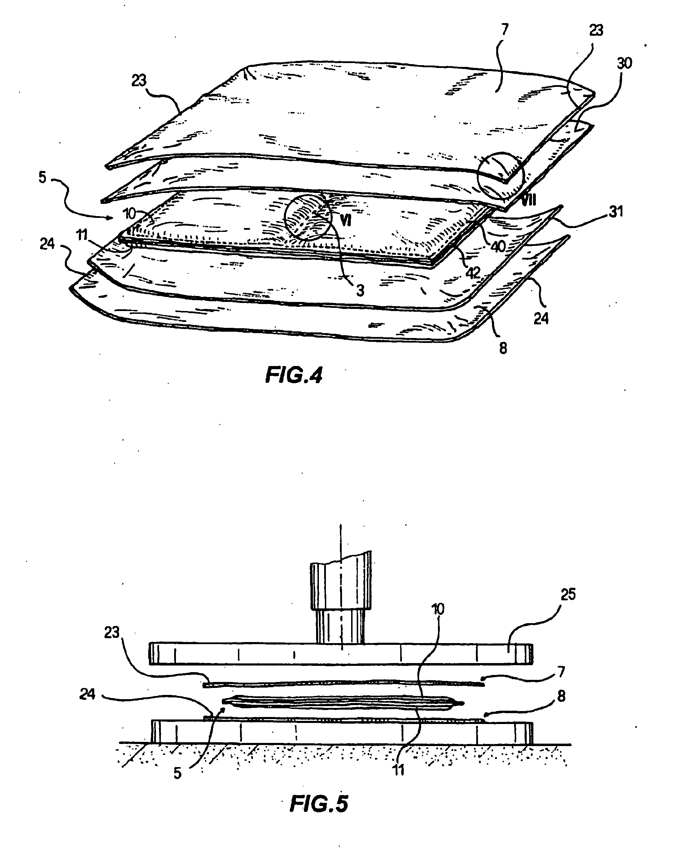

In the example shown, each mesh 10, 11 has an extension such that it lines almost entirely a respective wall 7, 8. Even more particularly, each mesh 10, 11 is fixed stably to the surface of the respective wall 7, 8 by means of a film of glue (indicated, for example, by the number 30, 31 in Figure 4).

Basically, the inflatable member 2 comprises a prefabricated textile structure 5 including the two meshes 10, 11 and the tie members 12 and also comprises two walls 7, 8 or sheets which in the example are gas-tight, are fixed perimetrally to each other and receive the textile structure 5; the two walls 7, 8 are each arranged so as to adhere to the respective mesh 10, 11.

The walls of 7, 8 are made of polyamide or polyurethane. In a further embodiment, the walls 7, 8 are made of a laminate comprising a layer of fabric 7a, in the example a layer of 100% nylon (which constitutes about 65% by weight of the laminate), and a layer of glue 7b, in the example a film of glue (which constitutes about 35% by weight of the laminate), for example polyurethane glue, which is distributed over the fabric layer 7a by means of spreading with a roller (Figure 7).

In the case where the laminate is used, the abovementioned film of glue 30, 31 is arranged in contact with the layer of glue 7b of the laminate.

Fixing of the tie members 12 to the meshes 10, 11 at the opposite ends 12a, 12b of the tie members 12 themselves is, for example, achieved by means of simple insertion or interweaving of the tie members 12 between the wefts of the meshes 10, 11. Basically, in the example shown in the figures, the tie members 12 are formed by means of a given number of threads which are fixed to one mesh 10 and in succession to the other mesh 11 by means of interweaving, or by means of tying or similar fixing systems.

Alternatively, each tie member 12 is a thread integrally interlaced with or extending continuously from both said first and second meshes 10, 11. Basically, the thread/tie member 12 extends from one of said first and second meshes 10, 11 and is integrally interlaced with the other one of said first and second meshes 10, 11 . The assembly composed of the two meshes 10 and 11 and the tie members 12 form a so-called three-dimensional or double-knit fabric.

The meshes 10 and 11 are made of polyester or polyamide.

With reference to Figures 2 to 8, the protection device 1 according to the present disclosure, as described above, is manufactured in the manner indicated below. In particular, in Figures 2 to 8, so that the description can be understood more easily, the structure 5 is shown with the tie members 12 partly tensioned. It is, however, to be understood that the seams 3 are formed with the meshes 10, 11 adhering as close as possible to each other and with the tie members 12 collapsed between the meshes 10, 11.

First of all, a pair of meshes 10, 11 are arranged facing each other at a predefined distance and ends 12a, 12b of the tie members 12 are tied or fixed in some other way to them, the length of said tie members 12 being chosen so as to define a maximum relative distance between the meshes 10, 11 corresponding to maximum local expansion of the inflatable member 2 in the inflated condition.

Then the structure 5 including the meshes 10, 11 and the tie members 12 undergoes stitching or seaming. The stitching steps are indicated by way of example in the form of needles 35, 36, 37.

In particular at least one seam 3 is formed in a central zone of the inflatable member 2 intended to be used for the folding zone P and also preferably a perimetral seam 40 is formed along the perimeter 42 of said meshes 10, 11. Then, the structure 5 is included between two films of glue 30, 31 and between the two walls 7, 8 as can be seen in Figure 4.

The two walls 7, 8 have perimetral portions 23, 24 which project relative to the entire perimeter 42 of the meshes 10, 11. Basically, the two walls at 7, 8 have a superficial extension greater than that of the respective meshes 10, 11.

According to one mode of implementing the method, each wall 7, 8 is joined beforehand together with the respective film of glue 30, 31 and is in turn glued, by means of a hot press 25, to the respective mesh 10, 11 of the structure 5 (Figure 5). Consequently each mesh 10, 11 lines and adheres to the respective walls 7, 8, leaving free perimetral portions 23, 24 of the walls 7, 8 which are glued directly together.

From the description of this manufacturing method it can be clearly understood that the seam 3 allows, on the one hand, easier folding of the inflatable member 2 even when it is inflated, since it reduces to a minimum the thickness of the inflatable member 2 in the folding zone P, and at the same time does not hinder inflation of the walls 7, 8.

The perimetral seam 40, on the other hand, is intended to increase the strength of the inflatable member 2 when the latter is inflated, preventing overloading and tearing of the walls 7, 8 along the edges 23, 24.

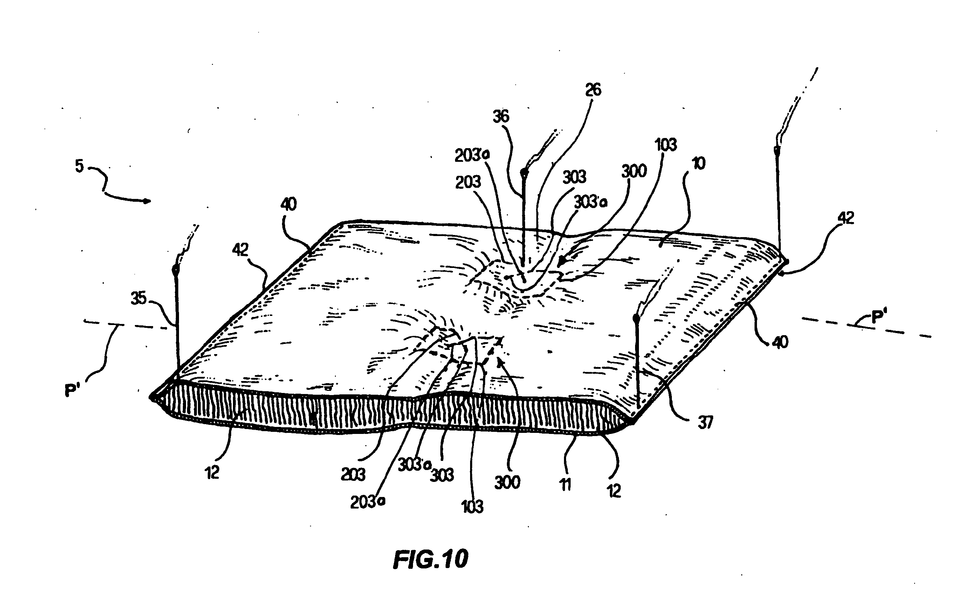

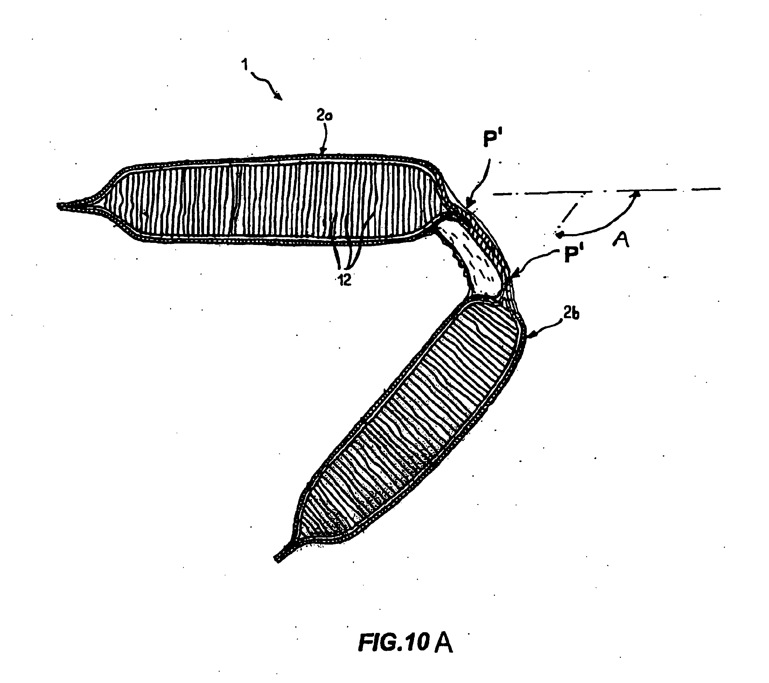

According to a variation of embodiment, with reference to Figure 10, the double-layer structure 5 includes, instead of the linear seam 3 described above, a seam 300 which follows a closed line, i.e. having the form of a closed loop, in the example a closed polygonal line.

In this embodiment, parts which have the same function and structure retain the same reference number as in the embodiments previously described and therefore are not described again in detail.

More particularly, the seam 300 includes a substantially rectangular portion 103 and terminal portions 203, 303 which intersect each other. Even more particularly, said terminal portions 203, 303 intersect each other so that the free ends 203a, 303a of said terminal portions 203, 303 are arranged inside the closed loop.

Basically, the seam 300 has free ends 203a, 303a which are protected by the seam itself since they are situated in a region which, precisely because of the close-loop seam 300 which encloses them, is stressed much less than the remaining parts of the seam 300.

The single intersection of the terminal portions 203, 303 avoids excessive and repeated overlapping of seam portions which could otherwise result in excessive thickening and hinder adhesion of the meshes 10, 11 to the respective wall 7, 8. Moreover, the arrangement of the free ends 203a, 303a inside the closed loop has the effect that the free ends 203a, 303a of the seam 300 are not directly exposed to the fluid which passes through there.

The seam 300 joining together the meshes 10, 11 is formed in a manner substantially similar to that used for the preceding embodiment, using the same processing steps illustrated in Figures 2, 3, 4 and 5.

Even more preferably in order to favour a fold P', two closed-loop seams 300 are formed so that each fold P' is performed substantially along a line which extends passing through each of the seams 300. Essentially, there are two substantially parallel folding zones P' indicated by means of a broken line in Figure 10.

The use of two seams 300 arranged alongside each other is advantageous for forming folds P' where the relative displacement A of two adjacent parts 2a, 2b of the inflatable member 2 is greater than 90° with respect to a coplanar condition, as shown in Figure 10A. Preferably, in order to reduce as far as possible interference between the adjacent parts 2a, 2b of the inflatable member 2, the distance between said two seams 300 is at least equal to the length of the tie members which connect together the meshes 10, 11.

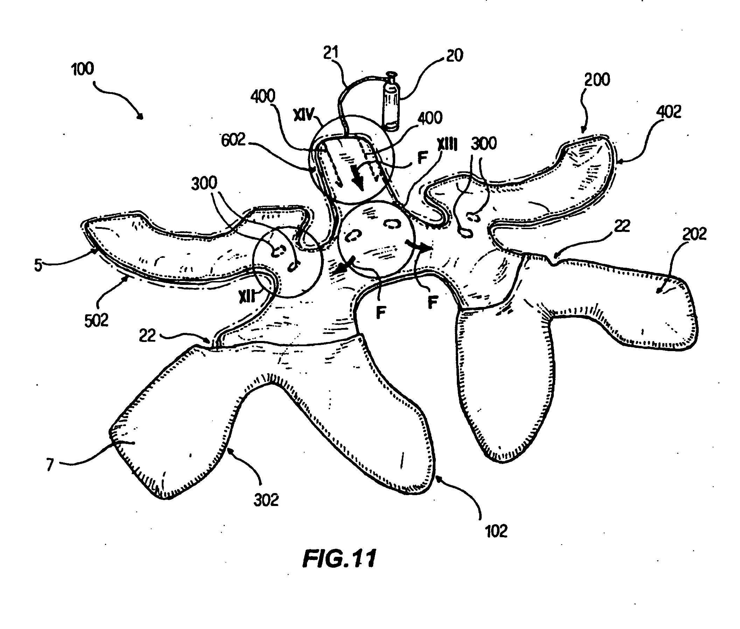

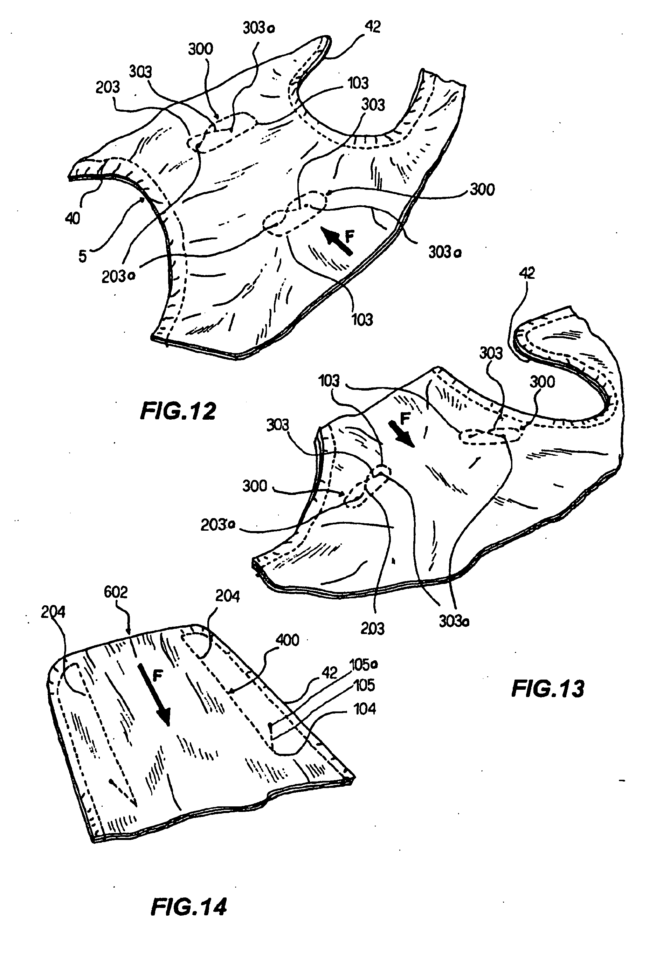

With reference to Figures 11 to 18, another embodiment of a protection device 100 according to the present disclosure is described. In this embodiment parts which have the same function and structure retain the same reference number as in the embodiments previously described and therefore are not described again in detail. In particular, the protection device 100 includes an inflatable member 200 intended to protect the upper portion of the body of a user and produced by means of the processing steps previously described.

Even more particularly, the inflatable member 200 includes a central part 102 having the form of an open ring and intended to be positioned around the neck of the user; the inflatable member 200 also includes two front lateral appendages 202, 302 which are intended to be placed over the shoulders, two rear lateral appendages 402, 502 which are intended to be positioned over the shoulder blades, and a rear central appendage 602 intended to be positioned over the spine.

The central part 103 and the appendages 202, 302, 402, 502, 602 communicate pneumatically with each other and are formed by means of the textile structure 5 and the walls 7, 8.

In the example, a cold-helium canister 20 is connected in fluid communication, via a pipe 21, with the rear central appendage 602 of the inflatable member 200.

From the form of the inflatable member 200 described above and from the intended use mentioned it can be understood that, during use, the rear lateral appendages 402, 502 and the rear central appendage 602 are folded relative to the central part 102.

Moreover, each of the front lateral appendages 202, 203 is folded slightly relative to the central part 102 in accordance with the inclined anatomical form of a user's shoulders.

The inflatable member 200 comprises a plurality of seams 300 which are formed as a closed loop, are exposed to the flow of the fluid F and are intended to retain relative to each other the opposite surface portions of the abovementioned meshes 10, 11 of the inflatable member 200 so as to limit in a localised manner expansion of the inflatable member 200 and thus allow easy folding.

Even more particularly, the inflatable member 200 includes six seams 300 arranged in pairs in zones where the central part 102 and the lateral rear appendages 402, 502 and the rear central appendage 602 are connected together. Respective folding of the inflatable member 200 is performed in the region of each pair of seams 300.

More particularly, along the pairs of seams 300 provided between the central part 102 and each of the lateral rear appendages 402, 502, it is possible to form a fold substantially at an angle of 180° with complete overlapping of each lateral rear appendage 402, 502 onto a respective portion of the central part 102. A layered arrangement of the inflatable member 200 is therefore obtained.

The inflatable member 200 also includes two secondary seams 400 which are also formed in the manner of the seams 3, 300, i.e. which join together opposite portions of the meshes 10, 11.

In specific case, the secondary seams 400 are intended to laterally retain a gas generator 20 which may be positioned inside the rear central appendage 602 of the inflatable member 200, thus creating a housing inside which the gas generator 20 is received with a limited degree of lateral clearance.

Each secondary seam 400 has an elongated form and includes a straight section 204 and a curved section 104. In the case of said secondary seams 400, the curved section 104 is folded substantially so as to form an elbow relative to said straight section 204.

Even more particularly, the straight section 204 is formed as an extension of the perimetral seam 40.

The curved section 104 comprises a terminal portion 105, which extends towards the respective side of the perimeter 42 of the meshes 10, 11 so that a free end 105a of secondary seam 400 is positioned between the respective straight section 204 and the perimetral seam 40 of which it forms an extension.

In order to favour further relative rotation of the front lateral appendages 202, 302 relative to the central part 102, the inflatable member 200 includes incisions 22 formed along the perimeter and having a V shape with the concavity directed towards the respective lateral rear appendage 402, 502. The incisions 22 are positioned between each of the front lateral appendages 202, 203 and the central part 102.

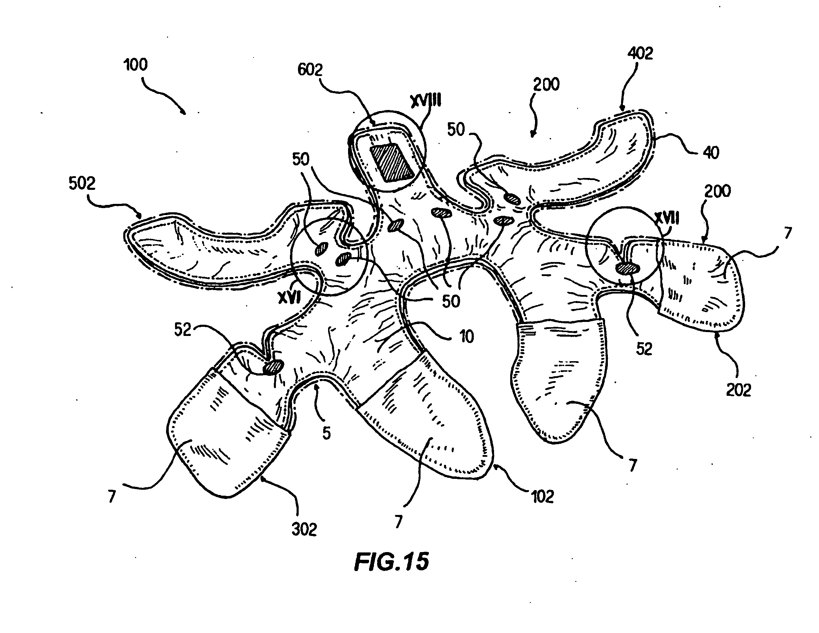

According to another aspect of the present disclosure, the protection device 100 comprises a plurality of reinforcing elements 50, 52, 54 (see Figures 15 to 18), each of which is able to be fixed to the inflatable member 200 along respective seams and preferably over closed-loop seams 300, secondary seams 400 and some sections of the perimetral seam 40.

In particular, the protection device 1 comprises twelve substantially oval-shaped reinforcing elements 50, six of which are visible in Figure 15, each of them being fixed along a respective annular seam 300, directly on the mesh 10 and on the mesh 11.

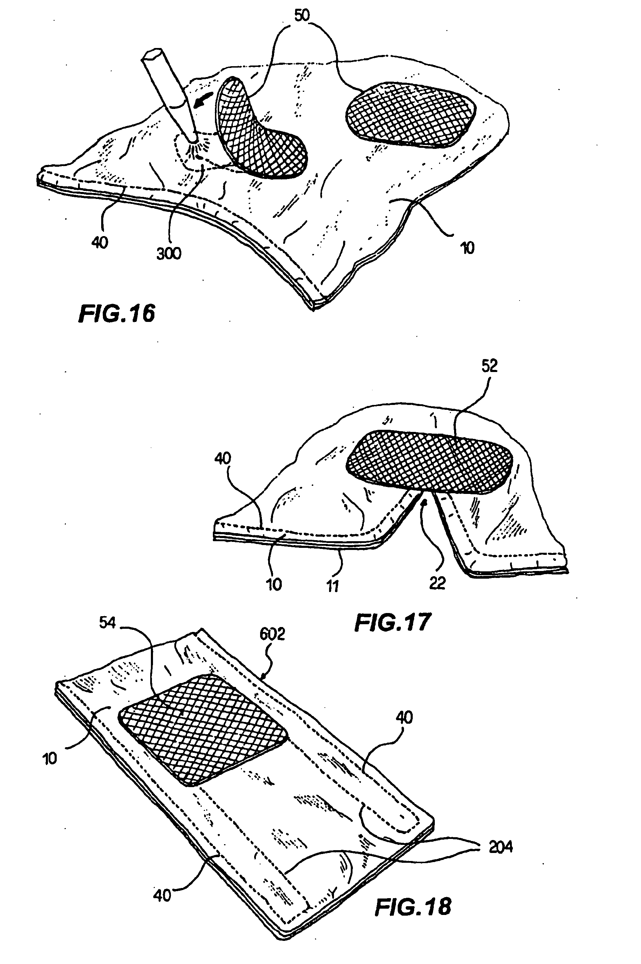

A pair of rectangular-shaped reinforcing elements 54, one of which is visible in a Figure 15 and Figure 18, are fixed on the rear central seam 602 of the inflatable member 200 and partly cover both the two secondary seams 400, directly on the mesh 10 and on the mesh 11, leaving the straight section 204 of each secondary seam 400 exposed (Figure 18).

Four reinforcing elements 52, two of which are visible in Figure 15 and Figure 17, are furthermore provided along a portion of the perimetral seam 40, in particular where the central part 102 of the inflatable member 200 is connected to the lateral front appendages 202, 302, in particular opposite the abovementioned V-shaped incision 22 on either side of the inflatable member 200.

Each of said reinforcing elements 50, 52, 54 in the example is formed by a sheet or foil of flexible composite material (for example polyurethane-based carbon or fibreglass) with a thickness of a few millimetres (for example 2 mm) and a surface area comparable to the area of the seam to be protected. The reinforcing elements 50, 52, 54 are fixed beforehand, for example using a polyurethane glue as illustrated in Figure 16, to the mesh 10 and to the mesh 11, respectively, of the structure 5 before including and the fixing in an adhering manner the structure 5 between the two walls 7, 8. Each reinforcing element 50, 52, 54 is therefore positioned between the mesh 10, 11 and the respective wall 7, 8.

These reinforcing elements 50, 52, 54 impart greater stability to the closed-loop seams 300, the secondary seams 400 and the perimetral seam 40 of the inflatable member 200 when acted on by the pressurised gas. Moreover, these reinforcing elements 50, 52, 54 ensure greater insulation of the seams 300, 400 and 40 and favour perfect adhesion of the walls 7, 8 to respective meshes 10, 11.

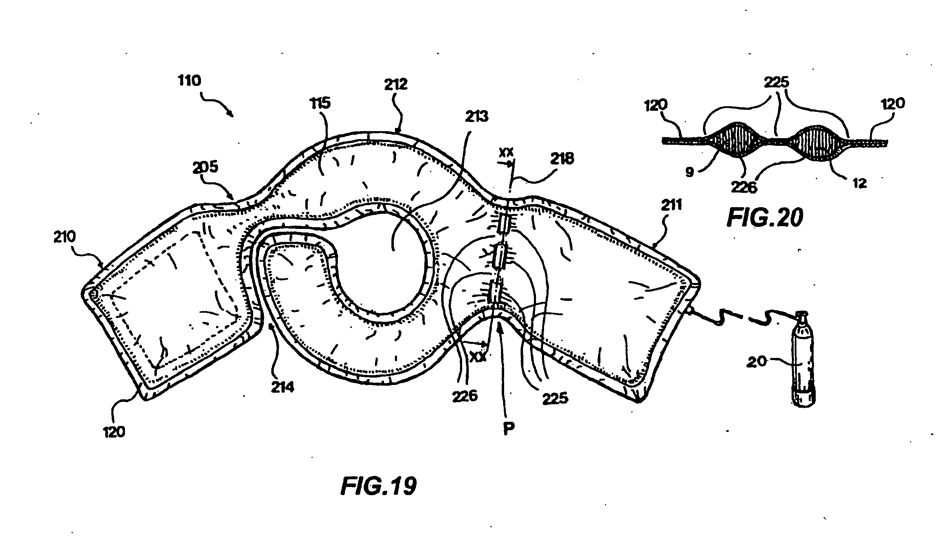

With reference to Figure 19, a further example of a protection device according to the present disclosure is illustrated, being indicated by the reference number 110.

In this further embodiment parts which have the same function and structure retain the same reference number as in the embodiments previously described and therefore are not described again in detail.

The protection device 110 has a bib-like form and comprises a pair of inflatable members 210, 211 intended to be positioned respectively over the chest and the back of a user; said inflatable members 210, 211 are connected together by means of a substantially toroidal member 212, or collar, which can also be inflated and communicates pneumatically with the inflatable members 210 and 211. Essentially, the inflatable members 210, 211, 212 define a single inflatable bag 205.

The member 212 defines a central region 213, or cavity, intended to receive a user's neck around which the inflatable toroidal member 212 is arranged.

This toroidal member 212 is in the form of an open ring and has in fact an opening 214 allowing the user to easily insert his/her head (and therefore neck) into the central region 213. Moreover, this open ring allows the device 110 to be incorporated into a garment, for example a motorcyclist's jacket or riding suit, which comprises means for opening/closing the garment (for example a zip fastener) along the user's chest; this is achieved by arranging said opening/closing means so that they extend along the opening 214 and an adjacent edge of the inflatable member 210.

Each inflatable member 210, 211, 212 is defined by opposite walls (only one wall 115 of which is visible) facing each other; the walls are, for example, made of the same material as the aforementioned walls 7, 8 and therefore made of a sheet of soft and gas-tight material, for example polyurethane or polyamide, or the aforementioned laminate. The walls adhere to each other and are sealed along the perimetral edges 120 of the inflatable members 210, 211, 212. In other words, the inflatable members 210, 211, 212 are defined by two walls, or sheets, which are suitably shaped, arranged on top of each other and joined together along the entire perimetral edge 120.

Each inflatable member 210, 211, 212 has defined internally, between the two walls, an internal chamber 9 in particular comprising the already mentioned pair of meshes 10, 11, each associated with or fixed/glued to a respective wall.

In order to allow two inflatable members 210, 211, 212 to fold or rotate relative to each other along a given line 218 (for example, so as to allow the back member 211 to fold relative to the neck member 212 along an axis of rotation 218), special arrangements are provided along said line 218; said arrangements essentially consist of preferential folding regions P.

In the example this is obtained by providing portions 225 of the inflatable bag 205 which are aligned along said axis of rotation 218 and where the opposite meshes 10, 11 are stitched together or in any case joined together so as to limit or prevent their relative displacement (as shown in Figure 20). Free portions 226 are defined between the stitched portions 225 and allow the inflatable bag 205 to expand. In this way, along the axis 218, the thickness of the inflatable bag 205 is limited in the inflated condition and therefore folding along the said axis 218 as well as rotation of the inflatable members 211, 212 relative to each other are favoured; at the same time, the free portions 226 allow pneumatic communication to be maintained between the inflatable members 211, 212 ahead of and after the axis 218.

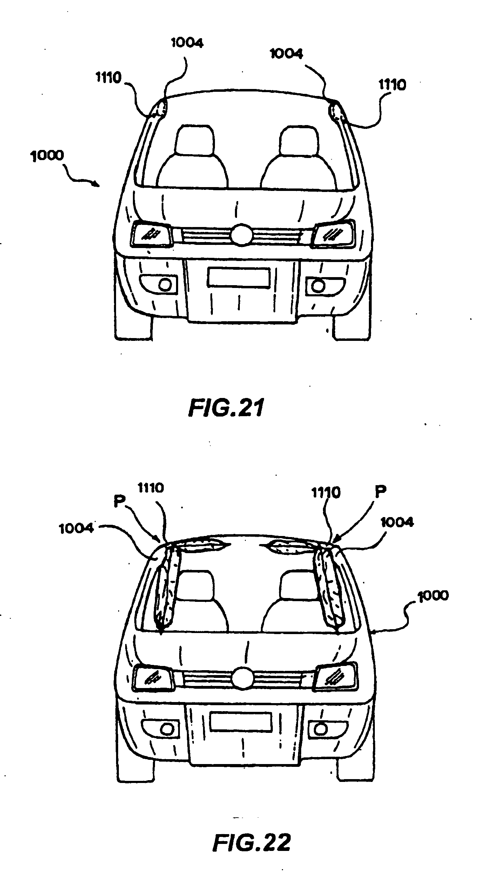

With reference to Figures 21 and 22, a further example of a protection device according to the present disclosure is illustrated, being indicated by the reference number 1110. In particular, in the example of the protection device 1110 is intended for a motor vehicle 1000 and is arranged inside a housing 1004 between the roof and the side wall of the passenger/driver compartment inside the vehicle 1000. The protection device 1100, when inflated, spreads outwards, being arranged along the roof and along the door side of the vehicle 1000.

In particular, the protection device 1110 is made using the processing steps described above with reference to Figures 2 to 5 and includes a central folding zone P obtained by means of stitching of meshes (not visible in the figures).

Basically, the stitching allows the protection device 1110 for the vehicle 1000 to be folded between the roof and the side wall of the passenger compartment and moreover to remain folded also in the inflated condition.

In order to perform inflation of an inflatable member according to the present disclosure, in any one of its embodiments, in the event of an accident and/or fall and/or sliding and/or impact on the part of a user or a vehicle being travelled in, the protection device according to the present disclosure is able to cooperate with special activation and inflation means, of which a helium canister (cold gas generator) is shown solely by way of example in the figures, being arranged for example on the outside of the inflatable member.

Alternatively, these means may comprise gas generators of the pyrotechnic or hybrid type or other types known according to the present art.

Said inflation means are operated by a control unit by means of sensing of the state of the vehicle/user system; for example, in the case of a motorcycle, said control unit may activate a fall prediction system which allows timely identification of the fall and reliable prediction thereof by means of speed sensors integral with the vehicle (or the user) and a unit for processing the signals generated by the said sensors. Alternatively, the protection device according to the present disclosure can also be applied using an actuating cable connected to the motorcycle, which cable triggers inflation of the inflatable member following separation of the user from the vehicle, for example following a fall or an impact.

In any case, the aforementioned activation and inflation means may be incorporated in the protection device or may be located on the outside thereof.

In the case of the protection device being fitted inside a motor vehicle, the inflation means are operated by a control unit by means of sensing of the state of movement and deceleration of the motor vehicle, for example using the techniques already used for activation of airbags of the prior art.

It should also be noted that the activation methods, although they constitute an aspect of particular importance for effective operation of the device, will hot be described further in greater detail, these being methods which are essentially already known to a person skilled in the art.

The protection device optionally comprises an deflation valve (not shown in the drawings) communicating, on one side, with the internal chamber and, on the other side, with the external environment so as to allow deflation of the inflatable member following activation and when a projective action is no longer required.

This deflation valve, which is normally in a closed position, is for example manually opened by the user, in particular when, as a result of accidental activation or following an impact causing activation of the device, the user wishes to continue using the vehicle. Opening of the deflation valve in fact has the effect that, owing to the difference in pressure between the inflated member and external environment, the gas flows out of the internal chamber and the inflatable member deflates. Alternatively, activation of the deflation valve may be controlled by an electronic control unit (not shown) which opens the deflation valve after lapsing of a predefined time interval (for example 15 seconds) following activation of the inflation means.

According to a variation of embodiment, a deflation pipe having a diameter which is predefined depending on the required deflation time is used instead of the deflation valve.

The subject of the present disclosure has been described hitherto with reference to preferred embodiments thereof. It is understood that other embodiments relating to the same inventive idea may exist, all of these falling within the scope of protection of the claims which are provided hereinbelow.

## Claims

1. Protection device (1, 100, 110, 1110) for protection of a user, said protection device (1, 100, 110, 1110) comprising an inflatable member (2; 200, 102, 202, 302, 402, 502, 602; 205, 210, 211, 212) including:
- a first wall (7, 115) and a second wall (8) fixed together along respective perimetral edges (23, 24, 120) so as to form an internal chamber (9), and a plurality of tie members (12),
**characterized in that** it further includes
- a textile structure (5) including a first mesh (10), a second mesh (11), said first mesh (10) being situated opposite said second mesh (11) and the tie members (12) having opposite ends (12a, 12b) fixed respectively to said first mesh (10) and to said second mesh (11);
wherein said first mesh (10) lines internally at least partly said first wall (7, 115) and said second mesh (11) lines internally at least partly said second wall (8, 116) and wherein the protection device (1, 100, 110, 1110) includes at least one seam (3, 300) which connects a surface portion of said first mesh (10) to an opposite surface portion of said second mesh (11) and wherein said at least one seam (3, 300) is arranged in the region of a folding zone (P, P') of said inflatable member (2; 200, 102, 202, 302, 402, 502, 602; 205, 210, 211, 212).

2. Protection device (1, 100, 110, 1110) according to Claim 1, wherein said at least one seam (3, 300) is arranged along a flow path (F) of a fluid for inflating the inflatable member (2; 200, 102, 202, 302, 402, 502, 602; 205, 210, 211, 212) and wherein said at least one seam (3, 300) occupies a restricted zone (225) of said structure (5) and leaves at least one adjacent zone (26, 226) free for the passage (F) of said inflation fluid.

3. Protection device (1, 100, 110, 1110) according to Claim 1 or 2, comprising at least two seams (3, 300) arranged alongside each other.

4. Protection device (1, 100, 110, 1110) according to any one of Claims 1 to 3, wherein said at least one seam (300) defines a closed, substantially loop-like line (103).

5. Protection device (1, 100, 110, 1110) according to Claim 4, wherein said at least one seam (300) has terminal portions (203, 303) which intersect each other towards the inside of said loop (103) and have free ends (203a, 303a) arranged inside said loop (103).

6. Protection device (1, 100, 110, 1110) according to any one of Claims 1 to 5, comprising at least one reinforcing element (50) arranged between one of said first mesh (10) and second mesh (11) and the respective first wall (7, 115) and second wall (8) of said inflatable member (2; 200, 102, 202, 302, 402, 502, 602; 205, 210, 211, 212) and superimposed on said at least one seam (3, 300).

7. Protection device (1, 100, 110, 1110) according to Claim 6, including at least one pair of reinforcing elements (50) superimposed on said at least one seam (3, 300) on each of said first mesh (10) and second mesh (11).

8. Protection device (1, 100, 110, 1110) according to any one of the preceding claims, including at least one secondary seam (400) which connects a surface portion of said first mesh (10) to an opposite surface portion of said second mesh (11), wherein said at least one secondary seam (400) is situated in a lateral position with respect to a flow path (F) of a fluid for inflating the inflatable member (2; 200, 102, 202, 302, 402, 502, 602; 205, 210, 211, 212) and is situated in a zone for introduction of said inflation fluid.

9. Protection device (1, 100, 110, 1110) according to Claim 8, comprising at least one reinforcing element (54) arranged between each one of said first mesh (11) and second mesh (7) and the respective first wall (7, 115) and second wall (8) of said inflatable member (2; 200, 102, 202, 302, 402, 502, 602; 205, 210, 211, 212) and superimposed on said at least one secondary seam (400).

10. Protection device (1, 100, 110, 1110) according to any one of the preceding claims, including an incision (22) formed on the perimeter (42) of said inflatable member (200).

11. Protection device (1, 100, 110, 1110) according to Claim 10, comprising at least one reinforcing element (52) arranged opposite said incision (22).

12. Protection device (1, 100, 110, 1110) according to Claim 6, 7, 9 or 11, wherein said reinforcing element (50, 52, 54) is a part of an impermeable sheet.

13. Protection device (1, 100, 110, 1110) according to any one of Claims 1 to 12, wherein said tie members (12) are of the flexible type.

14. Protection device (1, 100, 110, 1110) according to any one of the preceding claims, including a layer of glue (30, 31) arranged between each mesh (10, 11) and the respective wall (7, 8, 115, 116) and wherein said layer of glue (30, 31) is arranged between said at least one seam (3, 300) and the wall (7, 8).

15. Protection device (1, 100, 110, 1110) according to any one of the preceding claims, also comprising means (20) for inflating said inflatable member (2; 200, 102, 202, 302, 402, 502, 602, 205, 210, 211, 212).

## Patentansprüche

1. Protektionsvorrichtung (1, 100, 110, 1110) zum Schutz eines Nutzer, wobei die Protektionsvorrichtung (1, 100, 110, 1110) ein aufblähbares Element (2; 200, 102, 202, 302, 402, 502, 602, 205, 210, 211, 212) aufweist, einschließlich:
einer ersten Wandung (7, 115) und einer zweiten Wandung (8), die entlang jeweiliger Umfangskanten (23, 24, 120) derart zusammengefügt sind, dass sie eine Innenkammer (9) ausbilden, und einer Mehrzahl von Zugelementen (12),
wobei die Protektionsvorrichtung (1, 100, 110, 1110) ferner **gekennzeichnet ist, durch**:
eine Textilstruktur (5) einschließlich einem ersten Geflecht (10) und einem zweiten Geflecht (11), wobei das erste Geflecht (10) entgegengesetzt zum zweiten Geflecht (11) vorgesehen ist und die Zugelemente (12) mit entgegengesetzten Enden (12a, 12b) jeweils am ersten Geflecht (10) und am zweiten Geflecht (11) fixiert sind;
wobei das erste Geflecht (10) innen zumindest teilweise mit der ersten Wandung (7, 115) auf einer Linie liegt und das zweite Geflecht (11) innen zumindest teilweise mit der zweiten Wandung (8, 116) auf einer Linie liegt, und
wobei die Protektionsvorrichtung (1, 100, 110, 1110) mindestens einen Saum (3, 300) aufweist, der einen Oberflächenabschnitt des ersten Geflechts (10) mit einem entgegengesetzten Oberflächenabschnitt des zweiten Geflechts (11) verbindet und
wobei der mindestens eine Saum (3, 300) im Bereich einer Faltzone (P, P') des aufblähbaren Elements (2; 200, 102, 202, 302, 402, 502, 602, 205, 210, 211, 212) angeordnet ist.

2. Protektionsvorrichtung (1, 100, 110, 1110) nach Anspruch 1, wobei der mindestens eine Saum (3, 300) entlang eines Flusspfads (F) eines Fluids zum aufblähen des aufblähbaren Elements (2; 200, 102, 202, 302, 402, 502, 602, 205, 210, 211, 212) angeordnet ist und wobei der mindestens eine Saum (3, 300) eine beschränkten Zone (225) der Struktur (5) einschließt und mindestens eine benachbarte Zone (26, 226) für die Passage (F) des Aufblähfluids frei lässt.

3. Protektionsvorrichtung (1, 100, 110, 1110) nach Anspruch 1 oder 2, die mindestens zwei Säume (3, 300) aufweist, die längsseitig zueinander angeordnet sind.

4. Protektionsvorrichtung (1, 100, 110, 1110) nach einem der Ansprüche 1 bis 3, wobei der mindestens eine Saum (3, 300) eine geschlossene, im Wesentliche schleifenförmige Linie (103) definiert.

5. Protektionsvorrichtung (1, 100, 110, 1110) nach Anspruch 4, wobei der mindestens eine Saum (300) Anschlussabschnitte (203, 303) aufweist, welche sich bezüglich der Schleife (103) nach Innen hin überschneiden und freie Enden (203a, 303a) aufweisen, die innerhalb der Schleife (103) angeordnet sind.

6. Protektionsvorrichtung (1, 100, 110, 1110) nach einem der Ansprüche 1 bis 5, die mindestens ein Verstärkungselement (50) aufweist, das zwischen dem ersten Geflecht (10) und dem zweiten Geflecht (11) oder der jeweiligen ersten Wandung (7, 115) und zweiten Wandung (8) des aufblähbaren Elements (2; 200, 102, 202, 302, 402, 502, 602, 205, 210, 211, 212) angeordnet und auf dem mindestens einen Saum (3, 300) aufgesetzt ist.

7. Protektionsvorrichtung (1, 100, 110, 1110) nach Anspruch 6 einschließlich mindestens einem Paar von Verstärkungselementen (50), die auf dem mindestens einen Saum (3, 300) auf jedem von dem ersten Geflecht (10) und dem zweiten Geflecht (11) aufgesetzt sind.

8. Protektionsvorrichtung (1, 100, 110, 1110) nach einem der vorstehenden Ansprüche, einschließlich mindestens eines zweiten Saums (400), welcher einen Oberflächenabschnitt des ersten Geflechts (10) mit einem entgegengesetzten Oberflächenabschnitt des zweiten Geflechts (11) verbindet, wobei der mindestens eine zweite Saum (400) seitlich zum Flusspfad (F) eines Fluids zum Aufblähen des aufblähbaren Elements (2; 200, 102, 202, 302, 402, 502, 602, 205, 210, 211, 212) und in einer Zone zum Einführen des Aufblähfluids vorgesehen ist.

9. Protektionsvorrichtung (1, 100, 110, 1110) nach Anspruch 8, die mindestens ein Verstärkungselement (54) aufweist, das zwischen dem ersten Geflecht (11) und dem zweiten Geflecht (7) und der jeweiligen ersten Wandung (7, 115) und zweiten Wandung (8) des aufblähbaren Elements (2; 200, 102, 202, 302, 402, 502, 602, 205, 210, 211, 212) angeordnet und auf dem mindestens einen zweiten Saum (400) aufgesetzt ist.

10. Protektionsvorrichtung (1, 100, 110, 1110) nach einem der vorstehenden Ansprüche, einschließlich einer Einkerbung (22), die am Rand (42) des aufblähbaren Elements (200) ausgebildet ist.

11. Protektionsvorrichtung (1, 100, 110, 1110) nach Anspruch 10, die mindestens ein Verstärkungselement (52) aufweist, das der Einkerbung (22) entgegengesetzt angeordnet ist.

12. Protektionsvorrichtung (1, 100, 110, 1110) nach einem der Ansprüche 6, 7, 9 oder 11, wobei das Verstärkungselement (50, 52, 54) Teil einer undurchlässigen Schicht ist.

13. Protektionsvorrichtung (1, 100, 110, 1110) nach einem der Ansprüche 1 bis 12, wobei die Zugelemente (12) flexibel sind.

14. Protektionsvorrichtung (1, 100, 110, 1110) nach einem der vorstehenden Ansprüche, einschließlich einer Klebeschicht (30, 31), die zwischen jedem Geflecht (10, 11) und der jeweiligen Wandung (7, 8, 115, 116) vorgesehen ist, und wobei die Klebeschicht (30, 31) zwischen dem mindestens einen Saum (3, 300) und der Wandung (7, 8) vorgesehen ist.

15. Protektionsvorrichtung (1, 100, 110, 1110) nach einem der vorstehenden Ansprüche, die ferner Mittel (20) zum Aufblähen der aufblähbaren Elements (2; 200, 102, 202, 302, 402, 502, 602, 205, 210, 211, 212) aufweist.

## Revendications

1. Dispositif de protection (1, 100, 110, 1110) pour la protection d'un utilisateur, ledit dispositif de protection (1, 100, 110, 1110) comprenant un élément gonflable (2 ; 200, 102, 202, 302, 402, 502, 602 ; 205, 210, 211, 212) comprenant :
une première paroi (7, 115) et une deuxième paroi (8) fixées ensemble le long des bords périmétraux (23, 24, 120) respectifs afin de former une chambre interne (9) et une pluralité d'éléments formant lien (12),
**caractérisé en ce qu'**il comprend en outre une structure en textile (5) comprenant des premières mailles (10), des deuxièmes mailles (11), lesdites premières mailles (10) étant situées à l'opposé desdites deuxièmes mailles (11) et les éléments formant lien (12) ayant des extrémités opposées (12a, 12b) fixées respectivement sur lesdites premières mailles (10) et lesdites deuxièmes mailles (11) ;
dans lequel lesdites premières mailles (10) doublent intérieurement au moins partiellement ladite première paroi (7, 115) et lesdites deuxièmes mailles (11) doublent intérieurement au moins partiellement ladite deuxième paroi (8, 116) et dans lequel le dispositif de protection (1, 100, 110, 1110) comprend au moins une couture (3, 300) qui raccorde une partie de surface desdites premières mailles (10) à une partie de surface opposée desdites deuxièmes mailles (11) et dans lequel ladite au moins une couture (3, 300) est agencée dans la région d'une zone de pliage (P, P') dudit élément gonflable (2 ; 200, 102, 202, 302, 402, 502, 602 ; 205, 210, 211, 212).

2. Dispositif de protection (1, 100, 110, 1110) selon la revendication 1, dans lequel ladite au moins une couture (3, 300) est agencée le long d'une trajectoire d'écoulement (F) d'un fluide pour gonfler l'élément gonflable (2 ; 200, 102, 202, 302, 402, 502, 602 ; 205, 210, 211, 212) et dans lequel ladite au moins une couture (3, 300) occupe une zone limitée (225) de ladite structure (5) et laisse au moins une zone adjacente (26, 226) libre pour le passage (F) dudit fluide de gonflage.

3. Dispositif de protection (1, 100, 110, 1110) selon la revendication 1 ou 2, comprenant au moins deux coutures (3, 300) agencées l'une le long de l'autre.

4. Dispositif de protection (1, 100, 110, 1110) selon l'une quelconque des revendications 1 à 3, dans lequel ladite au moins une couture (300) définit une ligne fermée sensiblement en forme de boucle (103).

5. Dispositif de protection (1, 100, 110, 1110) selon la revendication 4, dans lequel ladite au moins une couture (300) a des parties terminales (203, 303) qui se coupent entre elles vers l'intérieur de ladite boucle (103) et ont des extrémités libres (203a, 303a) agencées à l'intérieur de ladite boucle (103).

6. Dispositif de protection (1, 100, 110, 1110) selon l'une quelconque des revendications 1 à 5, comprenant au moins un élément de renforcement (50) agencé entre l'une parmi lesdites premières mailles (10) et lesdites deuxièmes mailles (11) et la première paroi (7, 115) et la deuxième paroi (8) respectives dudit élément gonflable (2 ; 200, 102, 202, 302, 402, 502, 602 ; 205, 210, 211, 212) et superposé sur ladite au moins une couture (3, 300).

7. Dispositif de protection (1, 100, 110, 1110) selon la revendication 6, comprenant au moins une paire d'éléments de renforcement (50) superposés sur ladite au moins une couture (3, 300) sur chacune parmi lesdites premières mailles (10) et lesdites deuxièmes mailles (11).

8. Dispositif de protection (1, 100, 110, 1110) selon l'une quelconque des revendications précédentes, comprenant au moins une couture secondaire (400) qui raccorde une partie de surface desdites premières mailles (10) à une partie de surface opposée desdites deuxièmes mailles (11), dans lequel ladite au moins une couture secondaire (400) est située dans une position latérale par rapport à une trajectoire d'écoulement (F) d'un fluide pour gonfler l'élément gonflable (2 ; 200, 102, 202, 302, 402, 502, 602 ; 205, 210, 211, 212) et est située dans une zone pour l'introduction dudit fluide de gonflage.

9. Dispositif de protection (1, 100, 110, 1110) selon la revendication 8, comprenant au moins un élément de renforcement (54) agencé entre chacune parmi lesdites premières mailles (11) et lesdites deuxièmes mailles (7) et la première paroi (7, 115) et la deuxième paroi (8) respectives dudit élément gonflable (2 ; 200, 102, 202, 302, 402, 502, 602 ; 205, 210, 211, 212) et superposé sur ladite au moins une couture secondaire (400).

10. Dispositif de protection (1, 100, 110, 1110) selon l'une quelconque des revendications précédentes, comprenant une incision (22) formée sur le périmètre (42) dudit élément gonflable (200).

11. Dispositif de protection (1, 100, 110, 1110) selon la revendication 10, comprenant au moins un élément de renforcement (52) agencé à l'opposé de ladite incision (22).

12. Dispositif de protection (1, 100, 110, 1110) selon la revendication 6, 7, 9 ou 11, dans lequel ledit élément de renforcement (50, 52, 54) est une partie d'une feuille imperméable.

13. Dispositif de protection (1, 100, 110, 1110) selon l'une quelconque des revendications 1 à 12, dans lequel lesdits éléments formant lien (12) sont du type flexible.

14. Dispositif de protection (1, 100, 110, 1110) selon l'une quelconque des revendications précédentes, comprenant une couche de colle (30, 31) agencée entre chaque maille (10, 11) et la paroi (7, 8, 115, 116) respective et dans lequel ladite couche de colle (30, 31) est agencée entre ladite au moins une couture (3, 300) et la paroi (7, 8).

15. Dispositif de protection (1, 100, 110, 1110) selon l'une quelconque des revendications précédentes, comprenant également des moyens (20) pour gonfler ledit élément gonflable (2 ; 200, 102, 202, 302, 402, 502, 602 ; 205, 210, 211, 212).
